# FASCICULE DE BREVET EUROPEEN

(11) **EP 2 430 486 B1**
(45) Date de publication et mention de la délivrance du brevet: **20.03.2013**
(21) Numéro de dépôt: 10718611.6
(22) Date de dépôt: 12.05.2010
(51) Int. Cl.: G02B 7/182

(54) **MONTAGE DE MAINTIEN AVEC PRECISION D'UN COMPOSANT, NOTAMMENT OPTIQUE**
ANBRINGUNG ZUM PRÄZISEN HALTEN EINER KOMPONENTE, INSBESONDERE EINER OPTISCHEN KOMPONENTE
MOUNTING FOR PRECISELY SUPPORTING A COMPONENT, IN PARTICULAR AN OPTICAL COMPONENT

(30) Priorité: 14.05.2009 FR 0953199
(43) Date de publication de la demande: 21.03.2012
(73) Titulaire: Commissariat à l'Énergie Atomique et aux Énergies Alternatives, 75015 Paris (FR)
(72) Inventeur: CHAPPUIS, Christian, F-33510 Andernos Les Bains (FR); MACIAS, François, F-33380 Mios (FR)
(74) Mandataire: Ilgart, Jean-Christophe
(86) Numéro de dépôt international: PCT/EP2010/056534
(87) Numéro de publication internationale: WO 2010/130777

(56) Documents cités:
- EP-A- 1 962 124
- DE-A1- 4 426 160
- FR-A- 2 770 308
- FR-A- 2 773 890

## Description

Le sujet de l'invention est un montage de maintien avec précision d'un composant optique.

Un maintien à une position précise est recherché pour des composants optiques tels que des miroirs, dont la plus petite rotation ou déformation peut affecter l'appareillage auquel ils appartiennent ; mais il est difficile à assurer avec simplicité pour des composants optiques minces et de grandes dimensions, puisque les déformations dues au poids propre du composant peuvent jouer un rôle important quand le composant est placé verticalement. Les déformations d'origine thermique ont aussi un effet important sur la qualité de nombreux dispositifs de maintien. Enfin, l'utilisation de composants de section non circulaire complique l'emploi de certains montages.

Le composant optique peut être fixé par sa tranche dans un cadre, ou fixé par sa face arrière. Certains moyens comprennent l'enrobage dans un joint en élastomère ou dans de la colle souple, une fixation par un collage rigide, un collage rigide conjoint à des lames élastiques de support, ou des bridages en trois ou quatre points. Certains de ces montages sont souples et ont alors l'inconvénient d'être imprécis en étant insuffisamment rigides et stables; d'autres sont des fixations rigides qui garantissent une position précise du composant, mais ils ont l'inconvénient de transmettre des efforts importants provenant notamment des dilatations thermiques différentielles entre le composant et son support. Et certains sont difficilement applicables à des composants de grande taille et de section rectangulaire.

Il existe encore des systèmes de maintien isostatique composés de bras articulés ou plus généralement de pièces déformables élastiques, qui ont l'avantage général de maintenir le composant à une position précise et stable sans lui transmettre de contraintes importantes sous les déformations thermiques différentielles. Une bonne intégration du composant., sous encombrement réduit, est aussi rendue possible par ces systèmes. Toutefois, ces systèmes de maintien isostatique sont difficiles à mettre en oeuvre sur des composants de faible épaisseur et non circulaires en s'appuyant sur la tranche du composant. On est donc conduit à s'intéresser à des maintiens isostatiques par l'arrière du composant, mais les systèmes existants laissent apparaître l'inconvénient d'être sensibles aux déformations dues au poids propre du composant en subissant des déformations qui faussent la position ou l'orientation du composant.

Le sujet de l'invention est un montage dans lequel est employé au moins un dispositif de maintien isostatique d'un composant optique placé verticalement qui soit dépourvu de ce dernier inconvénient.

Sous une forme générale, l'invention concerne un montage comprenant un support, un composant optique et au moins un dispositif de maintien comprenant une embase, une extrémité, deux leviers s'étendant entre l'embase et l'extrémité en faisant un angle et en convergeant vers l'extrémité, les leviers étant articulés à l'embase et à l'extrémité de façon à être mobiles en rotation dans un plan où ils s'étendent tous deux, le composant étant fixé à l'extrémité du dispositif et l'embase étant fixée au support, caractérisé en ce que, le composant étant placé verticalement, un point où des axes des leviers se coupent est dans un même plan vertical s'étendant à une profondeur médiane du composant et auquel appartient le centre de gravité du composant, un plan où les leviers du dispositif s'étendent étant aussi vertical.

De tels dispositifs à deux leviers concourants ont déjà été employés pour soutenir des miroirs (FR-A- 2 773 890, EP-A- 1 962 124, DE-A- 44 26 160 et FR-A- 2 770 308 par exemple), mais les positions des points de concours des leviers tombent nettement hors du plan médian du miroir, qui est d'ailleurs placé horizontalement dans toutes ces antériorités.

Le point d'intersection des axes des leviers définit un pivot virtuel de rotation du composant optique destiné à être fixé à l'extrémité du dispositif. Il est proche de la ligne moyenne du composant, à laquelle appartient son centre de gravité. Le porte-à-faux entre le pivot virtuel et le point d'application du poids du composant est faible ou nul, de sorte que les déformations du dispositif de maintien dues au poids propre du composant ne se traduisent pas par une déformation importante de celui-ci.

Dans une conception simple et avantageuse, les leviers sont articulés au support et à l'extrémité par des lames élastiques.

Le caractère isostatique du montage peut être renforcé si les leviers sont encore articulés à l'embase et à l'extrémité de façon à être aussi mobiles en rotation perpendiculairement au plan précédemment défini.

Dans une forme particulière importante, les leviers sont articulés à l'embase et à l'extrémité par des paires de lames élastiques disposées en série le long des leviers, chacune des paires comprenant une lame orientée dans ledit plan et une lame perpendiculaire audit plan.

Un montage conforme à l'invention comprend un support, un composant optique et au moins deux dispositifs chacun conformes à ce qui précède, le composant étant fixé à l'extrémité de chaque dispositif et l'embase de chaque dispositif étant fixée au support, caractérisé en ce que, pour chacun des dispositifs, le point où les axes des leviers se coupent est dans un même plan vertical proche du centre de gravité du composant, une ligne verticale originaire du centre de gravité passant entre lesdits points où les axes des leviers se coupent. Dans ce cas, les dispositifs doivent être placés symétriquement par rapport à la ligne verticale.

Quoi qu'il en soit, l'isostaticité du montage est bien respectée si le composant est fixé au support par trois dispositifs, qui soit arrêtent chacun des translations du composant dans deux directions, soit arrêtent respectivement des translations dans une direction, deux directions et trois directions.

Dans une forme particulière de ce montage isostatique, les trois dispositifs fixant le composant au support comprennent tous des leviers articulés à une embase fixée dans le support et à une extrémité fixée au composant.

L'invention sera maintenant décrite en liaison aux figures suivantes:
- les figures 1 et 2 illustrent un dispositif de maintien utilisé dans l'invention,
- les figures 3 et 4 illustrent deux autres dispositifs de maintien,
- la figure 5 illustre un montage conforme à l'invention,
- la figure 6 est en schéma fonctionnel du montage de la figure 5,
- et les figures 7, 8, 9, 10, 11, 12 et 13 sont des schémas fonctionnels d'autres montages.

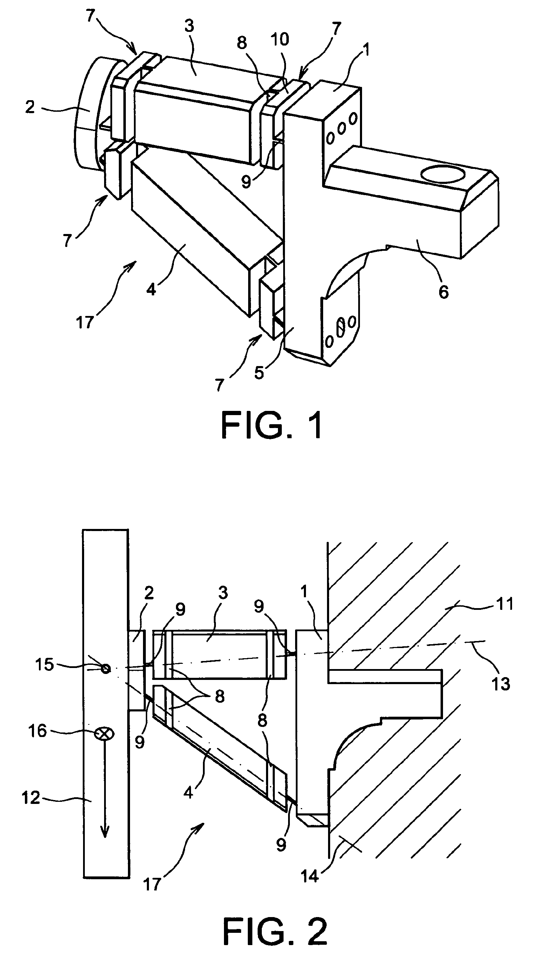

Un mode de réalisation important d'un dispositif 17 de maintien utilisé dans l'invention apparaît à la figure 1. Il comprend une embase 1, une extrémité 2, et un levier supérieur 3 et un levier inférieur 4 s'étendant chacun entre l'embase 1 et l'extrémité 2. Le levier supérieur 3 et le levier inférieur 4 sont dans un plan commun que l'on appellera vertical en référence à sa position la plus typique quand le dispositif sera en service. Il fait un angle aigu qui converge vers l'extrémité 2. L'embase 1 est composée d'une portion principale 5 verticale à laquelle les extrémités des leviers 3 et 4 sont fixées et d'un tenon 6 postérieur (opposé aux leviers 3 et 4 par rapport à la portion principale 5) qui est destiné à être encastré dans une structure fixe. Chacun des leviers 3 et 4 est articulé à la portion principale 5 par une articulation 7 composée d'une lame verticale 8 jointe aux leviers 3 ou 4, d'une lame horizontale 9 jointe à la portion principale 5 et d'une jonction 10 joignant les lames 8 et 9; les articulations permettent des mouvements des rotations des leviers 3 et 4 en direction verticale et en direction horizontale grâce à la souplesse des lames 9 et 8 et constituent donc des articulations à deux degrés de liberté de rotation. Les leviers 3 et 4 sont reliés à l'extrémité 2 par d'autres articulations 7 analogues, les lames verticales 8 sont encore jointes aux leviers 3 et 4 et les horizontales 9 étant cette fois jointes à l'extrémité 2.

Le montage typique de ce dispositif 17 est illustré à la figure 2: l'embase 1 est fixée à une structure fixe de support 11, et un composant optique 12 tel qu'un miroir est fixé à l'extrémité 2, par exemple par collage. Les leviers 3 et 4 possèdent des axes d'articulation 13 et 14 appartenant à un même plan et passant par les lames horizontales 9, qui possèdent un point d'intersection 15 situé un peu devant l'extrémité 2 et qui s'étend avantageusement dans le composant optique 12, et plus précisément à une profondeur médiane, dans un plan vertical originaire du centre de gravité 16 du composant 12 ou du moins à proximité: les efforts de gravité subis par le dispositif 17 en raison du poids du composant 12 induisent une rotation des leviers 3 et 4, mais qui produit un simple mouvement vertical du composant 12, sans basculement, qui modifierait sa forme. La limitation de la déformation du composant est un effet important de l'invention.

Dans la suite de cette description, on décrira certains montages isostatiques du composant 12 employant un dispositif tel que celui (17) des figures 1 et 2, mais certaines considérations générales vont d'abord être introduites. Le composant 12 sera supposé vertical.

Un montage isostatique comporte la suppression des six degrés de liberté sans redondance (trois translations et trois rotations) du composant 12, par une série d'éléments de liaison au support 11 judicieusement choisis et placés. Ces éléments doivent posséder de leur côté des degrés de liberté internes de souplesse afin d'éviter l'hyperstaticité du montage. Les éléments usuels bloquent le mouvement du composant 12 en une, deux ou trois directions principales (X, Y et Z) de translation. On appelle un «élément plan» une liaison qui bloque une direction de translation, «élément trait» une liaison qui bloque deux directions de translation et «élément point» une liaison qui bloque trois directions de translation. Le montage isostatique est donc obtenu usuellement par des combinaisons d'un élément trait, un élément point et un élément plan ou de trois éléments traits. Les combinaisons de six éléments plans reviennent à une combinaison de trois éléments traits. Si trois éléments sont dans un même plan (la face arrière du composant 12) et si un élément point est aligné sur un élément trait, ou si les trois éléments traits concourent en un seul point, les variations de distance entre les éléments, dues aux dilatations thermiques par exemple, ne créent pas de déformation du composant 12.

Voici des exemples de classification de dispositifs concrets de support parmi ces éléments. Une rotule autorise trois rotations et bloque trois translations et constitue donc un élément point. La mise en série de deux rotules bloque une seule translation et constitue un élément plan. Une rotule en série avec un axe de rotation constitue un élément trait.

Considérons maintenant des lames élastiques analogues aux lames 8 et 9 déjà rencontrées. Une lame courte autorise une seule rotation. Deux lames courtes perpendiculaires autorisent en série deux rotations, et si les deux axes de flexion sont parallèles à la face arrière du composant 12, les lames peuvent être considérées ensemble comme un élément point.

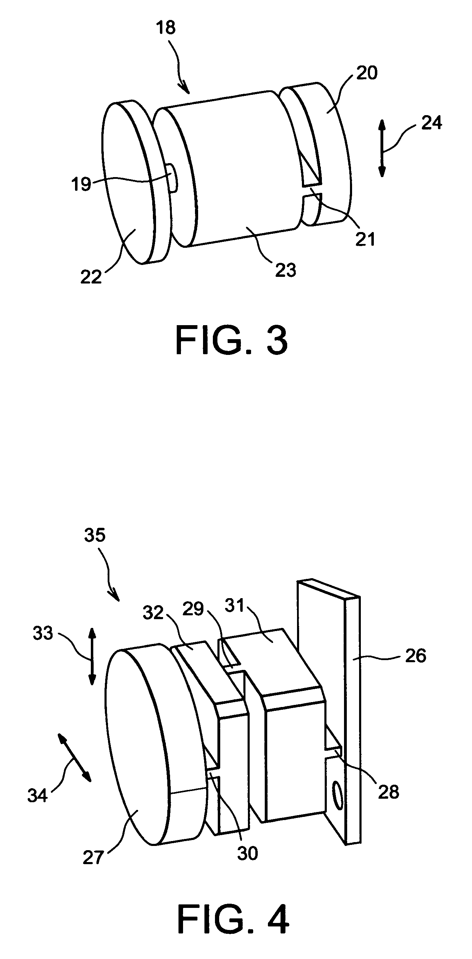

Un autre exemple de dispositif de maintien 18, donné à la figure 3, comprend, entre ses deux extrémités 22 et 20, une lame 21 et un fil 19 court avec une jonction 23 intermédiaire. Le fil 19 court est équivalent à une rotule autorisant trois rotations entre l'extrémité 22 et la jonction 23, et il constitue donc un élément point. Si le fil était plus long, ou si on disposait deux fils courts en série, une seule translation (dans l'alignement des extrémités 20 et 22) serait bloquée et on aurait un élément plan. Le dispositif 18 de la figure 3, composé d'une lame 21 en série avec un fil 19 court, autorise une seule translation entre les extrémités 20 et 22 (dans la direction 24 perpendiculaire à là lame 21) et constitue donc un élément trait. Un autre élément trait 35 est illustré à la figure 4 et comprend, entre deux extrémités 26 et 27, successivement une lame 28 horizontale, une lame 29 verticale et une lame 30 horizontale, des jonctions 31 et 32 reliant les lames 28 et 29, puis les lames 28 et 30. On s'aperçoit que cet élément autorise des translations le long de la direction verticale 33 entre les extrémités 26 et 27, alors que des translations autorisées dans la direction horizontale 34 sont plus réduites et même négligeables à cause de la faible longueur de la lame 29.

L'homme du métier pourra facilement concevoir d'autres reconstitutions d'éléments points, traits et plans d'après les indications précédentes et les possibilités de combinaisons entre les liaisons élémentaires. Le dispositif 17 décrit plus haut peut être considéré comme un élément trait, puisque les leviers 3 et 4 autorisent tous deux des translations du composant 12 dans la direction horizontale par rapport au support 1, mais bloquent les translations verticales malgré la souplesse des articulations 7.

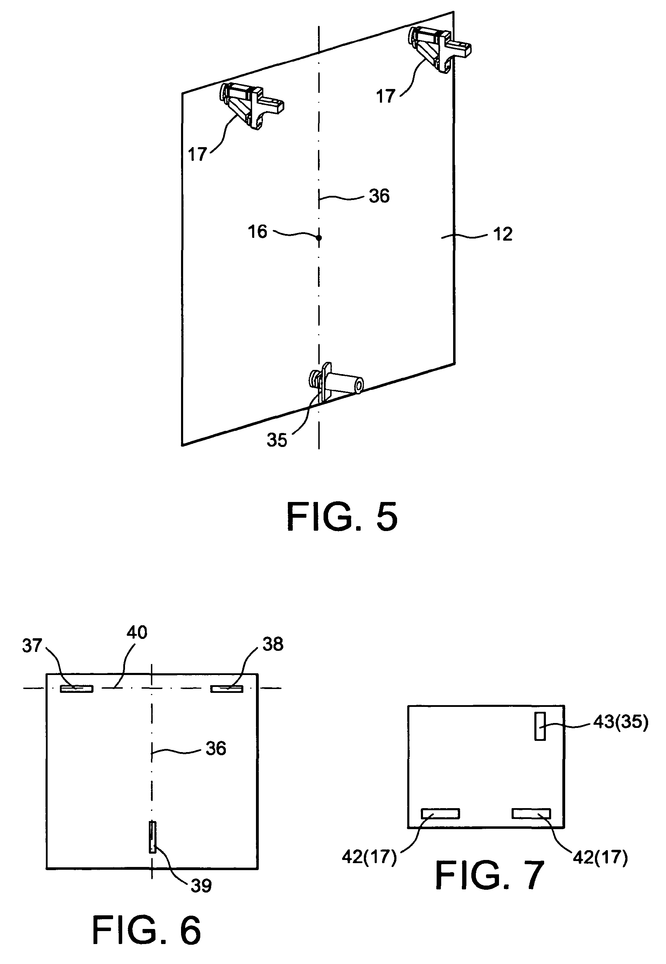

La figure 5 illustre un premier montage isostatique du composant optique 12. Il est maintenu par deux dispositifs 17 et un dispositif 35 conforme à la figure 4, tous fixés à sa face arrière. Les deux dispositifs 17 sont placés aux coins supérieurs droit et gauche, symétriquement par rapport à la ligne verticale centrale 36 du composant 12 (originaire du centre de gravité 16), à la même hauteur, et leurs leviers 3 et 4 s'étendent dans des plans verticaux. L'élément 35 est en bas du composant 12, sur la ligne centrale 36, et il est orienté de la façon représentée à la figure 4, avec deux de ses lames (28 et 30) horizontales et une (29) verticale. Les éléments 17 autorisent tous deux les translations horizontales du composant 12, mais bloquent les translations verticales, alors que le dispositif 35 a l'effet inverse d'autoriser les translations verticales tout en bloquant les translations horizontales. Leur combinaison bloque donc les trois translations (y compris perpendiculairement au composant 12). Le schéma peut être représenté à la figure 6, où on a symbolisé par 37 et 38 les mouvements autorisés respectivement par les dispositifs 17 et par 39 les mouvements autorisés par l'élément 35. Les mouvements 37 et 38 sont alignés sur une ligne horizontale 40, le mouvement 39 est aligné sur une ligne verticale 36 qui coupe la précédente avec une forme générale de T. Le montage isostatique est obtenu, en respectant le critère mentionné plus haut d'une liaison à trois éléments traits concourants, puisque les dispositifs 17 et 35 absorbent des efforts complémentaires.

Les dernières figures de la description schématisent d'autres modes de réalisation possibles. Le montage de la figure 7 ressemble à celui de la figure 6, si ce n'est que les éléments traits autorisant des mouvements horizontaux (ici 41 et 42) sont en bas du composant 12 et que l'élément trait autorisant les mouvements verticaux 43 est situé en haut en pouvant être au centre du composant 12 ou à un de ses angles, ce que l'on a représenté ici. Ce sont encore des dispositifs 17 qui autorisent les mouvements horizontaux 41 et 42 et un dispositif 35 qui autorise les mouvements verticaux 43; le maintien isostatique du composant 12 est respecté si les positions des dispositifs 17 et 35 varient, tant que la condition de concours des lignes des mouvements 41, 42, 43 subsiste.

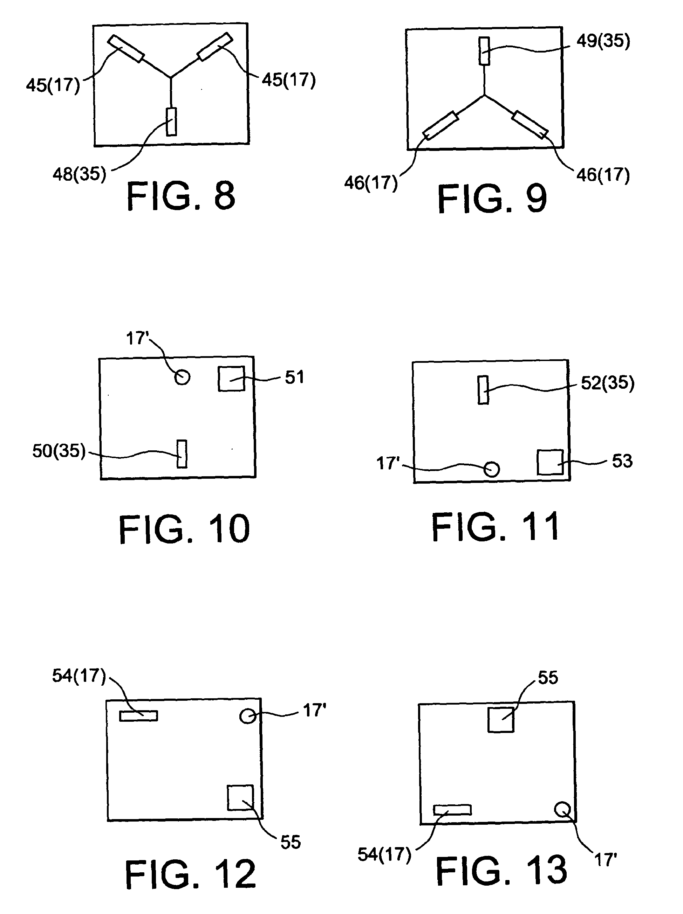

Les montages des figures 8 et 9 ressemblent à ceux des figures 6 et 7, mais les mouvements (44, 45, 46 ou 47) autorisés par les dispositifs 17 sont cette fois obliques, ce qui peut être obtenu en disposant obliquement les plans où s'étendent les leviers 3 et 4, contrairement à ce qu'on a proposé jusqu'ici. On retrouve des dispositifs 35 autorisant des mouvements verticaux 48 et 49. La convergence des directions des mouvements 44, 45 et 48 ou 46, 47 et 49 peut encore facilement être respectée.

Ainsi qu'on l'a mentionné, des montages à un élément trait, un élément point et un élément plan sont également possibles et l'invention peut les perfectionner. On recourra alors par exemple à des dispositifs, conformes à l'invention et analogues aux dispositifs 17, où les articulations 7 seront seulement remplacées par des lames horizontales courtes (analogues aux lames 9), joignant donc directement les leviers 3 et 4 soit à la portion principale 5 de l'embase 1, soit à l'extrémité 2; ces dispositifs auront la référence 17' et correspondront à des éléments points en ce qu'ils n'autoriseront plus la translation horizontale entre le composant 12 et la structure fixe 11 et bloqueront donc leurs trois translations principales.

Le montage de la figure 10 comprend un dispositif 17' en haut et au milieu du composant 12, un dispositif tel que 35 associé à un élément trait à mouvement vertical 50, en bas et au milieu comme aux montages des figures 6 et 8, et un dispositif associé à un élément plan 51 ailleurs, par exemple à un coin supérieur. La figure 11 décrit un montage symétrique par rapport à une ligne centrale du composant 12, c'est-à-dire avec le dispositif 17' en bas au centre, le dispositif 35 en haut au centre (autorisant encore un mouvement vertical 52) et un élément plan 53 à un coin inférieur. Le montage de la figure 12 comprend un dispositif 17 autorisant un mouvement horizontal (comme dans les figures 6 et 7) 54 à un coin supérieur, un dispositif 17' sur la ligne du mouvement 54 au coin supérieur opposé, et un élément plan 55 à un coin inférieur, par exemple du côté du dispositif 17'. Le dispositif pourrait être placé ailleurs, ce qu'illustre la figure 13 où les dispositifs 17 et 17' sont cette fois placés sur une ligne inférieure du composant 12 et l'élément plan en haut du composant 12.

Les dispositifs 17' possèdent la même propriété que les dispositifs 17 de soutenir le poids du composant 12 sans permettre son basculement grâce à la position du point d'intersection 15 des axes 13 et 14 à mi-profondeur du composant, de sorte que les montages à deux éléments traits conformes à l'invention pourront être remplacés par un élément trait et un élément point (conformes à l'invention,) se distinguant des montages précédents aussi en ce que le troisième élément sera un élément de type plan.

## Revendications

1. Montage comprenant un support, un composant (12) optique et au moins un dispositif (17) de maintien comprenant une embase (1), une extrémité (2), deux leviers (3, 4) s'étendant entre l'embase (1) et l'extrémité (2) en faisant un angle et en convergeant vers l'extrémité, les leviers étant articulés à l'embase et à l'extrémité de façon à être mobiles en rotation dans un plan où ils s'étendent tous deux, le composant optique étant fixé à l'extrémité du dispositif et l'embase étant fixée au support, **caractérisé en ce que**, le composant étant placé verticalement, un point (15) où des axes des leviers se coupent est dans un plan vertical s'étendant à une profondeur médiane du composant optique et auquel appartient le centre de gravité (16) du composant , un plan où les leviers du dispositif s'étendent étant aussi vertical.

2. Montage comprenant un support selon la revendication 1, **caractérisé en ce qu'**il comprend deux desdits dispositif de maintien et **en ce que**, pour chacun des dispositifs, le point (15) où les axes des leviers se coupent est dans un plan vertical s'étendant à une profondeur médiane du composant et auquel appartient le centre de gravité (16) du composant, une ligne verticale (36) originaire du centre de gravité passant entre lesdits points où les axes des leviers se coupent.

3. Montage selon la revendication 2, **caractérisé en ce que** lesdits dispositifs sont placés symétriquement par rapport à ladite ligne verticale (36).

4. Montage selon l'une quelconque des revendications 1 à 3, **caractérisé en ce qu'**il est isostatique, l'élément d'optique étant fixé au support par trois desdits dispositifs, qui soit arrêtent chacun des translations dans deux directions soit arrêtent des translations respectivement dans une direction, deux directions et trois directions.

5. Montage selon la revendication 4, **caractérisé en ce que** les trois dispositifs fixant l'élément d'optique au support comprennent tous des leviers articulés à une embase (1) fixée dans le support (11) et à une extrémité fixée (2) au composant (12).

6. Montage selon l'une quelconque des revendications 1 à 5, **caractérisé en ce que** les leviers sont articulés à l'embase (1) et à l'extrémité (2) par des lames élastiques (8,9).

7. Montage selon l'une quelconque des revendications 1 à 5, **caractérisé en ce que** les leviers sont articulés à l'embase et à l'extrémité de façon à être aussi mobiles en rotation perpendiculairement audit plan.

8. Montage selon les revendications 6 et 7, **caractérisé en ce que** les leviers sont articulés à l'embase et à l'extrémité par des paires de lames élastiques disposées en série le long des leviers, chacune des paires comprenant une lame (8) orientée dans ledit plan et une lame (9) perpendiculaire audit plan.

## Claims

1. Assembly comprising a support, an optical component and at least one supporting device (17) comprising a base (1), an end (2), two levers (3, 4) lying between the base (1) and the end (2) forming an angle and converging towards the end, the levers being articulated at the base and at the end so as to be free in rotation in a plane in which they both extend, the optical component being fixed to the end of the device and the base being fixed to the support, **characterised in that**, the component standing vertically, a point (15) at which the lever centre lines intersect is in a vertical plane extending at a median depth of the optical component and to which belongs the centre of gravity (16) of the component, a plane in which the levers of the device extend also being vertical.

2. Assembly comprising a support according to claim 1, **characterised in that** it comprises two of said supporting devices and **in that**, for each of the devices, the point (15) at which the lever centre lines intersect is in a vertical plane extending at a median depth of the component and to which belongs the centre of gravity (16) of the component, a vertical line (36) originating from the centre of gravity passing between said points at which the lever centre lines intersect.

3. Assembly according to claim 2, **characterised in that** said devices are placed symmetrically relative to said vertical line (36).

4. Assembly according to any one of claims 1 to 3, **characterised in that** the assembly is statically determinate, the optical element being fixed to the support by three said devices, in which either each of the devices prevents translations in one direction, or one device prevents translation in one direction, one in two directions and the third prevents translation in three directions.

5. Assembly according to claim 4, **characterised in that** all three devices fixing the optical element to the support comprise levers articulated at a base (1) fixed in the support (11) and at an end (2) fixed to the component (12).

6. Assembly according to any one of claims 1 to 5, **characterised in that** the levers are articulated at the base (1) and at one end (2) by elastic strips (8,9).

7. Assembly according to any one of claims 1 to 5, **characterised in that** the levers are articulated at the base and at the end so as to be as free as possible in rotation perpendicular to said plane.

8. Assembly according to claims 6 and 7, **characterised in that** the levers are articulated at the base and at the end by pairs of elastic strips arranged in series along the levers, each of the pairs comprising a strip (8) oriented in said plane and a strip (9) perpendicular to said plane.

## Patentansprüche

1. Anbringung, aufweisend einen Träger, ein optisches Bauteil (12) und mindestens eine Haltevorrichtung (17), die einen Sockel (1), ein Endstück (2) und zwei Hebel (3, 4) aufweist, die sich, unter Bildung eines Winkels, zwischen dem Sockel (1) und dem Endstück (2) erstrecken und dabei zum Endstück hin konvergieren, wobei die Hebel mit dem Sockel und dem Endstück gelenkig verbunden sind, derart, dass sie in einer Ebene, in der sie sich alle beide erstrecken, rotierbar sind, wobei das optische Bauteil am Endstück der Vorrichtung befestigt ist und der Sockel am Träger befestigt ist, **dadurch gekennzeichnet, dass**, wenn das Bauteil vertikal angeordnet ist, ein Punkt (15), in dem sich die Achsen der Hebel schneiden, sich in einer vertikalen Ebene befindet, die sich in einer Tiefe einer Mittellinie des optischen Bauteils erstreckt und der der Schwerpunkt (16) des Bauteils zugehörig ist, wobei eine Ebene, in der sich die Hebel der Vorrichtung erstrecken, ebenfalls vertikal ist.

2. Anbringung, aufweisend einen Träger nach Anspruch 1, **dadurch gekennzeichnet, dass** er zwei von den Haltevorrichtungen aufweist, und dadurch dass, für jede der Vorrichtungen, der Punkt (15), in dem sich die Achsen der Hebel schneiden, sich in einer vertikalen Ebene befindet, die sich in einer Tiefe einer Mittellinie des Bauteils erstreckt und der der Schwerpunkt (16) des Bauteils zugehörig ist, wobei eine vertikale Linie (36), die dem Schwerpunkt entspringt, zwischen den Punkten verläuft, in denen sich die Achsen der Hebel schneiden.

3. Anbringung nach Anspruch 2, **dadurch gekennzeichnet, dass** die Vorrichtungen symmetrisch zu der vertikalen Linie (36) angeordnet sind.

4. Anbringung nach einem der Ansprüche 1 bis 3, **dadurch gekennzeichnet, dass** sie isostatisch ist, wobei das optische Element am Träger mittels drei der Vorrichtungen befestigt ist, die entweder Translationsbewegungen jeweils in zwei Richtungen hemmen oder Translationsbewegungen jeweils in einer Richtung, zwei Richtungen und drei Richtungen hemmen.

5. Anbringung nach Anspruch 4, **dadurch gekennzeichnet, dass** die drei Vorrichtungen, die das optische Element am Träger befestigten, alle Hebel aufweisen, die mit einem am Träger (11) befestigten Sockel (1) und mit einem am Bauteil (12) befestigten Endstück (2) gelenkig verbunden sind.

6. Anbringung nach einem der Ansprüche 1 bis 5, **dadurch gekennzeichnet, dass** die Hebel mit dem Sockel (1) und dem Endstück (2) mittels elastischer Schneiden (8, 9) gelenkig verbunden sind.

7. Anbringung nach einem der Ansprüche 1 bis 5, **dadurch gekennzeichnet, dass** die Hebel mit dem Sockel und dem Endstück gelenkig verbunden sind, derart, dass sie auch senkrecht zu dieser Ebene rotierbar sind.

8. Anbringung nach den Ansprüchen 6 und 7, **dadurch gekennzeichnet, dass** die Hebel mit dem Sockel und mit dem Endstück mittels Paaren elastischer Schneiden gelenkig verbunden sind, die seriell entlang der Länge der Hebel angeordnet sind, wobei jedes der Paare eine Klinge (8), die in dieser Ebene ausgerichtet ist, und eine Schneide (9) aufweist, die senkrecht zu dieser Ebene ist.
